# EUROPEAN PATENT SPECIFICATION

(11) **EP 3 549 756 B1**
(45) Date of publication and mention of the grant of the patent: **04.05.2022**
(21) Application number: 16922840.0
(22) Date of filing: 01.12.2016
(51) Int. Cl.: B32B 3/12, B05D 3/12, C09J 5/00, F16B 5/01

(54) **PANEL PROCESSING METHOD**
PANEELBEARBEITUNGSVERFAHREN
PROCÉDÉ DE TRAITEMENT DE PANNEAU

(43) Date of publication of application: 09.10.2019
(73) Proprietor: Mitsubishi Electric Corporation, Chiyoda-ku Tokyo 100-8310 (JP)
(72) Inventor: HARADA, Katsuya, Tokyo 100-8310 (JP); TSUZUKI, Eiji, Tokyo 100-8310 (JP); SHIODA, Kazuma, Tokyo 100-8310 (JP); NAGAKURA, Yasunori, Tokyo 100-8310 (JP); MATSUNAGA, Keishi, Tokyo 100-8310 (JP); SAKAKIBARA, Takahiro, Tokyo 100-8310 (JP)
(74) Representative: Sajda, Wolf E.
(86) International application number: PCT/JP2016/085784
(87) International publication number: WO 2018/100721

(56) References cited:
- EP-A1- 0 780 581
- EP-A1- 2 108 504
- EP-A1- 2 781 763
- WO-A1-2014/121105
- DE-B1- 2 834 237
- JP-A- H11 348 155
- JP-A- H11 348 157
- JP-A- 2000 215 929
- JP-A- 2001 140 362
- US-A- 4 265 688
- BLITZER T N ED - BITZER T: "Sandwich panel repair", 1 January 1997 (1997-01-01), HONEYCOMB TECHNOLOGY : MATERIALS, DESIGN, MANUFACTURING, APPLICATIONS AND TESTING, CHAPMAN & HALL, GB, PAGE(S) 193 - 199, XP008108799, ISBN: 978-0-412-54050-9 * pages 196-197 *

## Description

### Technical Field

The present invention relates to a technique of performing a sealing process on a panel that employs a honeycomb core.

### Background Art

A structure such as an artificial satellite, a flying object, and an in-vehicle shelter often uses a lightweight, high-rigidity honeycomb sandwich panel.

A honeycomb sandwich panel is a structure in which a face material is adhered to each of the two surfaces of a honeycomb core with a sheet-type adhesive. An insert is embedded in the honeycomb sandwich panel.

The insert is an interface for connecting a component such as a structure member or an on-board apparatus. The insert is fixed to the honeycomb sandwich panel when a hole in which the insert is embedded is filled with a filler.

The insert is temporarily fixed to the honeycomb sandwich panel before the filler is charged.

Patent document DE 28 34 237 B is considered relevant and relates to a method of fixing an insert to a honeycomb core panel. Firstly, a hole is drilled into the cover layer such as a disc at the bottom. Thereafter, a cold-curing adhesive is poured into the hole. The insert is then pressed into the hole in order to produce an adhesive film on all sides by pushing the adhesive.

### Citation List

### Patent Literature

Patent Literature 1: JP 2001-140 362 A

### Summary of the Invention

### Technical Problem

Patent Literature 1 discloses a method of filling an insert-embedded hole with a filler.

If the quantity of filler for filling is large, the honeycomb sandwich panel is heavy. Therefore, the quantity of filler for filling is preferably small.

It is an object of the present invention to reduce the quantity of filler to fill a hole in which an insert is embedded.

### Solution to the Problem

A panel processing method of the present invention is set out in the appended independent claims. Advantageous further developments of the invention are set forth in the dependent claims.

### Advantageous Effects of the Invention

According to the present invention, it is possible to close a gap between a side portion of a bottom plate placed on a bottom portion of an embedding hole and a side surface of a honeycomb core located around the embedding hole. As a result, the filler will not fill a portion below the bottom plate, so that the quantity of filler for filling is decreased.

### Brief Description of the Drawings

- FIG. 1: is a sectional view of a panel 100 according to Embodiment 1.
- FIG. 2: is a sectional view of the panel 100 after a sealing process in Embodiment 1.
- FIG. 3: is a diagram illustrating the first step (S1) and the second step (S2) of a panel processing method in Embodiment 1.
- FIG. 4: is a diagram illustrating the third step (S3) and the fourth step (S4) of the panel processing method in Embodiment 1.
- FIG. 5: is a diagram illustrating the fifth step (S5) of the panel processing method in Embodiment 1.
- FIG. 6: is a diagram illustrating the first step (F1) and the second step (F2) of a panel fixing method in Embodiment 1.
- FIG 7: is a diagram illustrating the third step (F3) of the panel fixing method in Embodiment 1.
- FIG. 8: is a diagram illustrating the fourth step (S4) and the fifth step (S5) of a panel processing method in Embodiment 2.
- FIG. 9: is a diagram illustrating the fourth step (S4) and the fifth step (S5) of a panel processing method in Embodiment 3.
- FIG 10: is a diagram illustrating the third step (S3) and the fourth step (S4) of a panel processing method forming a part of the invention.

### Description of Embodiments

In the embodiments and drawings, the same elements or mutually corresponding elements are denoted by the same reference numeral. An explanation of the elements denoted by the same reference numeral will be omitted or simplified appropriately.

### Embodiment 1

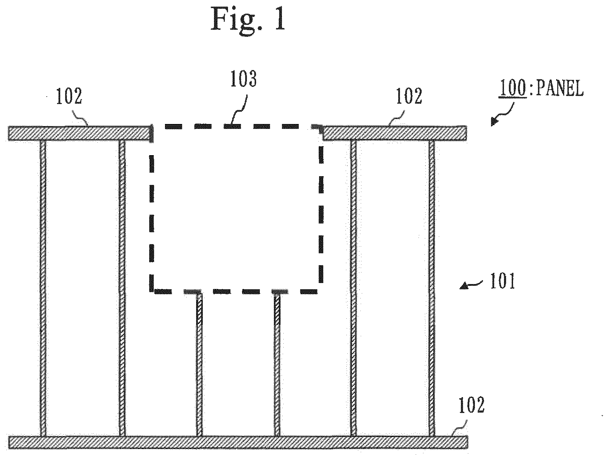

An embodiment in which a sealing process is performed on a panel that employs a honeycomb core will be described with reference to FIGS. 1 to 7.

### Description of Configuration

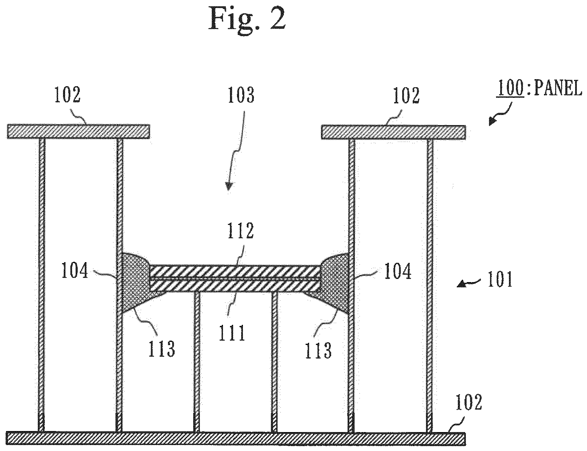

A configuration of a panel 100 will be described with reference to FIGS. 1 and 2. FIGS. 1 and 2 are sectional views of the panel 100.

As illustrated in FIG. 1, the panel 100 is a plate provided with a honeycomb core 101 and two face materials 102 and is formed by sandwiching the honeycomb core 101 with the face materials 102.

The honeycomb core 101 is formed of an array of a plurality of polygonal columns (for example, hexagonal columns). Each polygonal column is cylindrical.

The face materials 102 are adhered to the upper portion and the lower portion of the honeycomb core 101 with adhesive sheets. More specifically, the face materials 102 are made of aluminum or CFRP (Carbon Fiber Reinforced Plastic). The adhesive sheets are a sheet-type adhesive.

An embedding hole 103 is formed in the panel 100 by a boring process using a drill or the like.

The embedding hole 103 is a hole in which a component called an insert will be embedded.

The depth of the embedding hole 103 is smaller than the thickness of the panel 100. For example, the depth of the embedding hole 103 is almost half the thickness of the panel 100.

For example, the panel 100 is a honeycomb sandwich panel used in a structure such as an artificial satellite, a flying object, and an in-vehicle shelter.

As illustrated in FIG. 2, two plates, that is, a bottom plate 111 and a pushing plate 112 are placed to pile up on the bottom portion of the embedding hole 103.

A sealer 113 which protrudes as being sandwiched by the two plates closes the gap between the two plates and a wall 104 of the honeycomb core 101.

### Description of Procedure

As a procedure of the panel processing method of processing the panel 100, a procedure of a sealing process and a procedure of a fixing process will be described.

The sealing process is an operation of sealing a gap between a side portion of the bottom plate 111 and a flat surface of the honeycomb core 101. An nth step in the procedure of the sealing process will be referred to as "Sn" hereinafter where n is an integer.

The fixing process is an operation of fixing an insert 120 in the embedding hole 103. An nth step in the procedure of the fixing process will be referred to as "Fn" hereinafter.

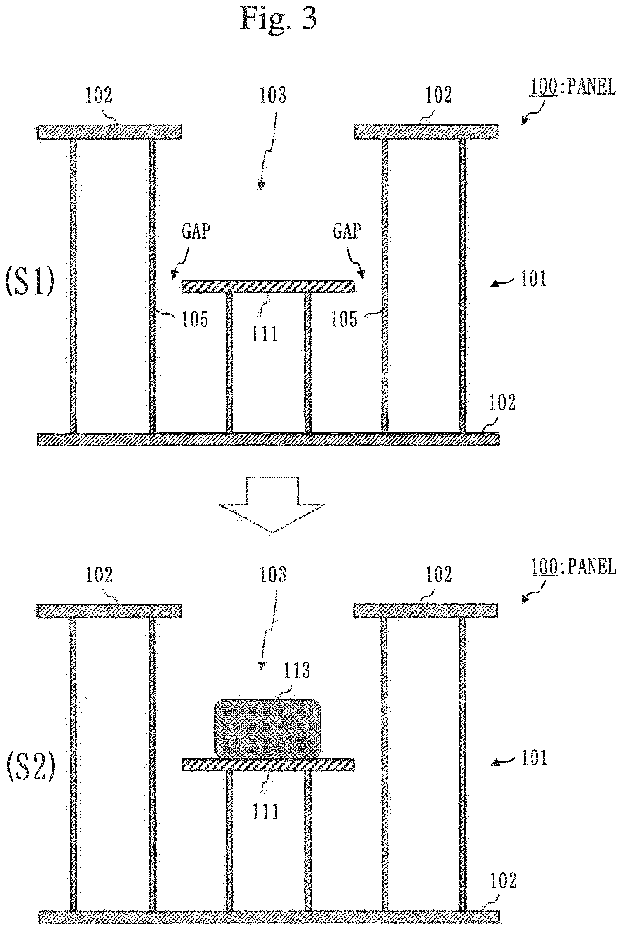

FIG. 3 illustrates the first step (S1) and the second step (S2) of the sealing process.

In the first step (S1), the bottom plate 111 is placed on the bottom portion of the embedding hole 103. A gap forms between the side portion of the bottom plate 111 and a wall surface 105 of the honeycomb core 101.

The bottom plate 111 is preferably made of a thin, lightweight, and rigid material. For example, the bottom plate 111 is a plate made of GFRP (Glass Fiber Reinforced Plastics).

A flat surface of the bottom plate 111 has a shape and size that match the inlet of the embedding hole 103. For example, if the inlet of the embedding hole 103 is circular, the flat surface of the bottom plate 111 is circular. If the diameter of the inlet of the embedding hole 103 is 1 cm (centimeter), the diameter of the flat surface of the bottom plate 111 is 1 cm or slightly shorter than 1 cm.

In the second step (S2), the sealer 113 is applied to an upper surface of the bottom plate 111.

The sealer 113 is an adhesive to close the gap between the side portion of the bottom plate 111 and the wall surface of the honeycomb core 101. For example, the sealer 113 is a cyanoacrylate-based adhesive or an acrylic-based adhesive. Alternatively, the sealer 113 is a hybrid type adhesive being a mixture of a cyanoacrylate-based adhesive and an acrylic-based adhesive.

In particular, a rapid-hardening instant adhesive may be preferably used as the sealer 113. This is to shorten the time required for processing the panel 100 by shortening the time taken until hardening. Note that the time taken until the sealer 113 hardens is longer than the time taken until the subsequent fifth step (S5) is performed.

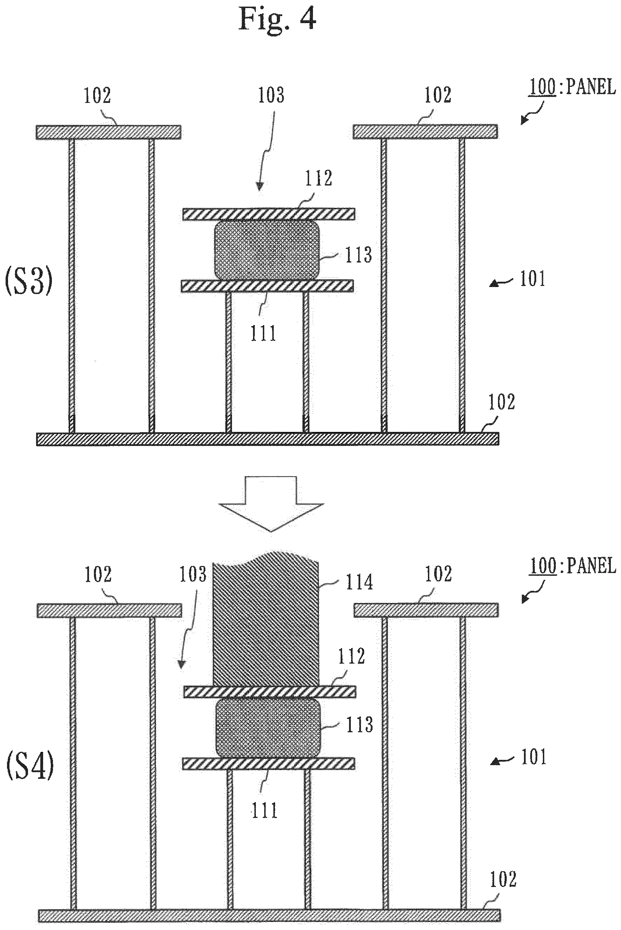

FIG. 4 illustrates the third step (S3) and the fourth step (S4) of the sealing process.

In the third step (S3), the pushing plate 112 is placed on the sealer 113 applied to the upper surface of the bottom plate 111.

The pushing plate 112 is desirably made of a thin, lightweight, and rigid material like the bottom plate 111 is.

The flat surface of the pushing plate 112 has a shape and size that matches the inlet of the embedding hole 103, like the flat surface of the bottom plate 111 does.

For example, the pushing plate 112 and the bottom plate 111 are identical.

In the fourth step (S4), a rod member 114 is inserted in the embedding hole 103.

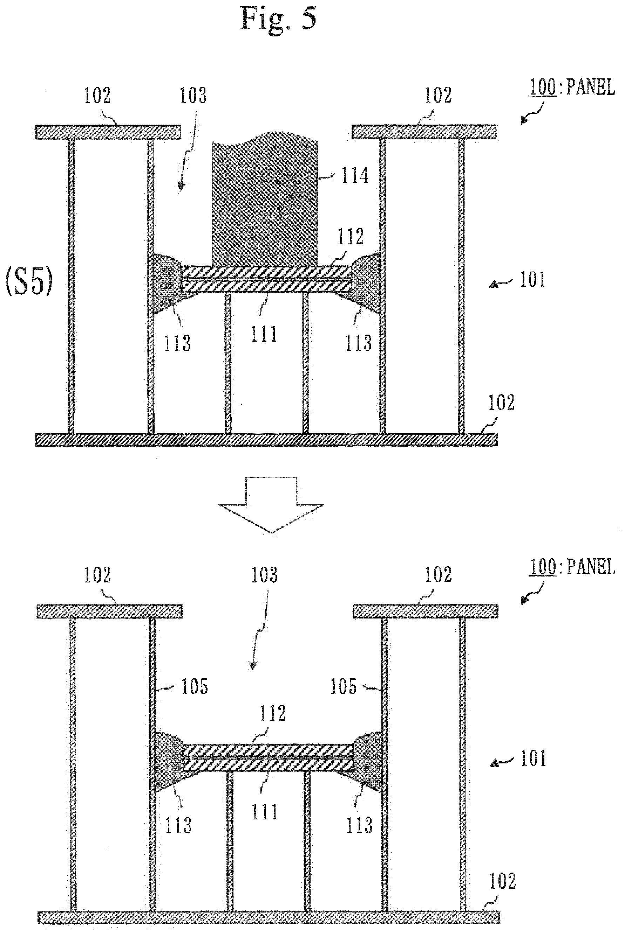

FIG. 5 illustrates the fifth step (S5) of the sealing process.

In the fifth step (S5), the pushing plate 112 is pushed by the rod member 114.

Accordingly, the pushing plate 112 is pressed against the sealer 113 applied to the upper surface of the bottom plate 111. Hence, the sealer 113 protrudes into the gap between the side portion of the bottom plate 111 and the wall surface 105 of the honeycomb core 101. Consequently, the gap is closed with the sealer 113.

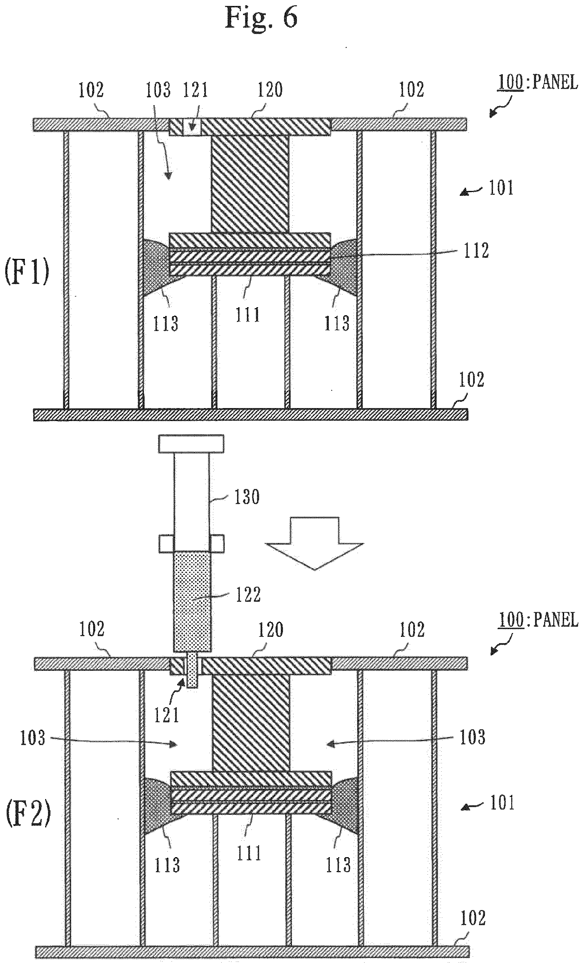

FIG. 6 illustrates the first step (F1) and the second step (F2) of the fixing process.

In the first step (F1), a temporary-fixing adhesive is applied to the upper surface of the pushing plate 112 and the insert 120 is embedded in the embedding hole 103.

The insert 120 is a metal component to serve as an interface for connecting a component such as a structure member or an on-board component to the panel 100.

The injection hole 121 for injecting a filler 122 is formed in an upper portion of the insert 120.

The flat surface of the upper portion of the insert 120 has a shape and size to match the inlet of the embedding hole 103 as the flat surface of the bottom plate 111 does. The flat surface of the lower portion of the insert 120 has a shape and size that are different from those of the inlet of the embedding hole 103. Note that the flat surface of the lower portion of the insert 120 is smaller than the inlet of the embedding hole 103.

The temporary-fixing adhesive is an adhesive for temporarily fixing the insert 120. For example, the temporary-fixing adhesive is an adhesive of the same type as the sealer 113.

In the second step (F2), a distal end of a syringe 130 containing the filler 122 is inserted in an injection hole 121.

The filler 122 is an adhesive for fixing the insert 120 to the embedding hole 103. For example, the filler 122 is a two-component mixture epoxy-based adhesive that uses a high-viscosity main agent and a low-viscosity hardening agent.

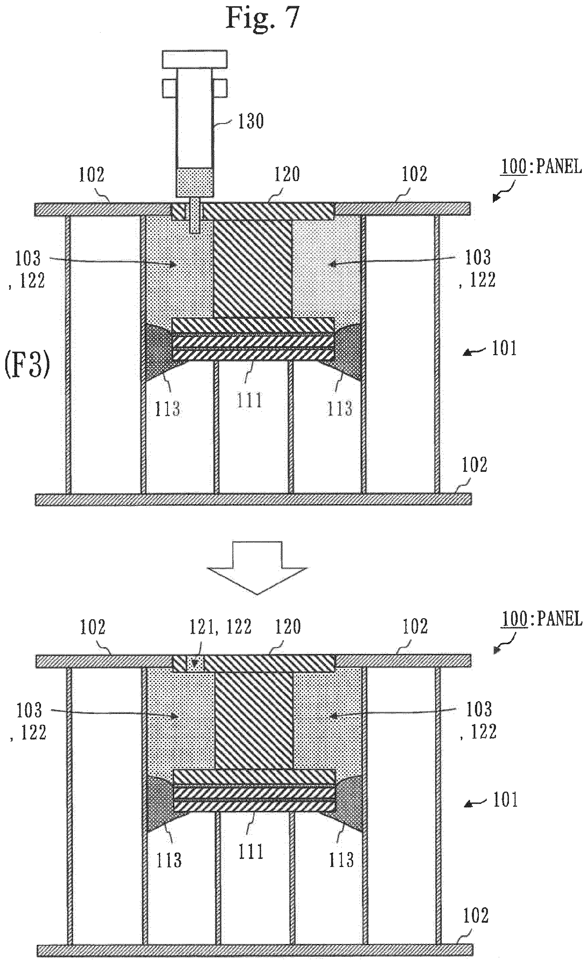

FIG. 7 illustrates the third step (F3) of the fixing process.

In the third step (F3), the filler 122 is injected into the embedding hole 103 from the syringe 130.

Thus, the embedding hole 103 is closed with the filler 122. As the filler 122 hardens, the insert 120 is fixed to the embedding hole 103.

Since the gap between the side portion of the bottom plate 111 and the side surface of the honeycomb core 101 is filled with the sealer 113, the filler 122 does not fill a portion below the bottom plate 111.

### Effect of Embodiment 1

It is possible to fill the gap between the side portion of the bottom plate 111 and the wall surface of the honeycomb core 101. As a result, the filler 122 will not fill the portion below the bottom plate 111, and accordingly the quantity of filler 122 for filling decreases. Hence, weight reduction of the panel 100 can be achieved.

As an operation for closing the gap between the side portion of the bottom plate 111 and the wall surface of the honeycomb core 101 with the sealer 113, an operation of manually spreading the sealer 113 applied to the upper surface of the bottom plate 111 with using a tool may be possible.

This operation, however, is very difficult. The reason is, for example, as the shape of the gap differs depending on the position of the embedding hole 103, the direction in which the gap is positioned and the size of the gap cannot be determined uniquely.

Also, the bottom plate 111 must be fixed to the bottom portion of the embedding hole 103 with the adhesive so that the bottom plate 111 will not move when spreading the sealer 113. Therefore, the operation cannot be carried out until the adhesive hardens and the bottom plate 111 is fixed. As a result, the sealing process becomes time consuming.

Meanwhile, in Embodiment 1, in order to close the gap between the side portion of the bottom plate 111 and the wall surface of the honeycomb core 101 with the sealer 113, the pushing plate 112 is pressed against the sealer 113 applied to the upper surface of the bottom plate 111, thereby causing the sealer 113 to protrude into the gap. Namely, since the gap can be closed by pressing the pushing plate 112 against the sealer 113, the operation is very easy.

The bottom plate 111 need not be fixed when pressing the pushing plate 112 against the sealer 113. Hence, the time taken for the sealing process can be shortened.

### Embodiment 2

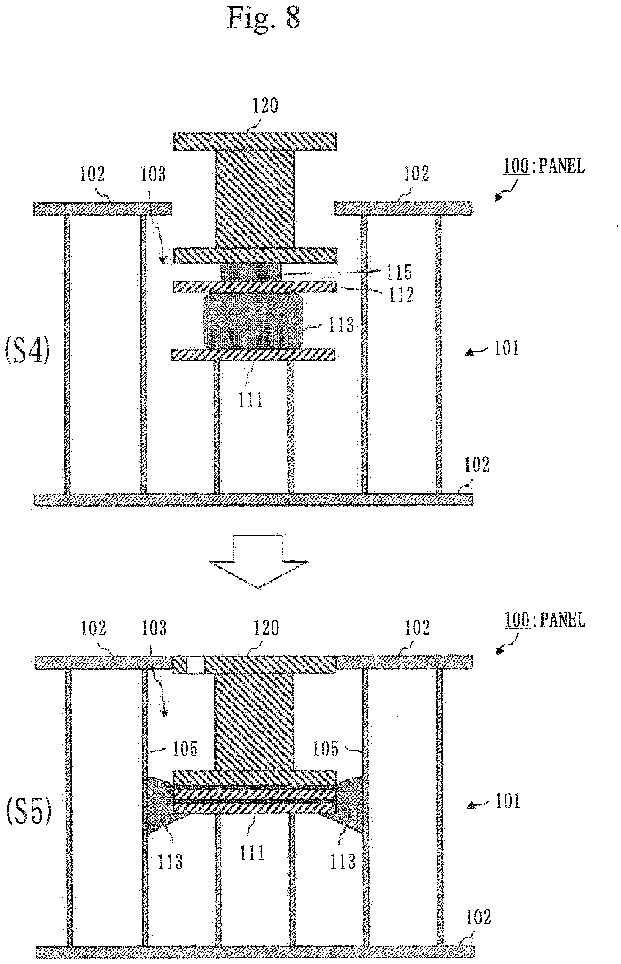

Concerning an embodiment in which a pushing plate is pressed against sealer by an insert instead of a rod member, its difference from Embodiment 1 will mainly be described with reference to FIG. 8.

### Description of Configuration

The configuration of a panel 100 is the same as that of Embodiment 1.

### Description of Procedure

In a sealing process, the first step (S1) to the third step (S3) are the same as those of Embodiment 1.

FIG. 8 illustrates the fourth step (S4) and the fifth step (S5) of the sealing process.

In the fourth step (S4), a temporary-fixing adhesive 115 is applied to the upper surface of a pushing plate 112, and an insert 120 is placed on the preliminary fixing adhesive 115.

In the fifth step (S5), the insert 120 is pushed into an embedding hole 103. That is, the insert 120 is embedded in the embedding hole 103.

Hence, the pushing plate 112 is pressed against a sealer 113 applied to the upper surface of a bottom plate 111. Then, the sealer 113 protrudes into the gap between the side portion of the bottom plate 111 and the wall surface 105 of the honeycomb core 101. As a result, the gap is closed with the sealer 113.

The procedure of the fixing process is the same as that of Embodiment 1.

### Effect of Embodiment 2

As the pushing plate 112 is pressed against the sealer 113 with using the insert 120, the sealing process can be carried out without using a rod member 114. That is, the sealing process is further facilitated.

### Embodiment 3

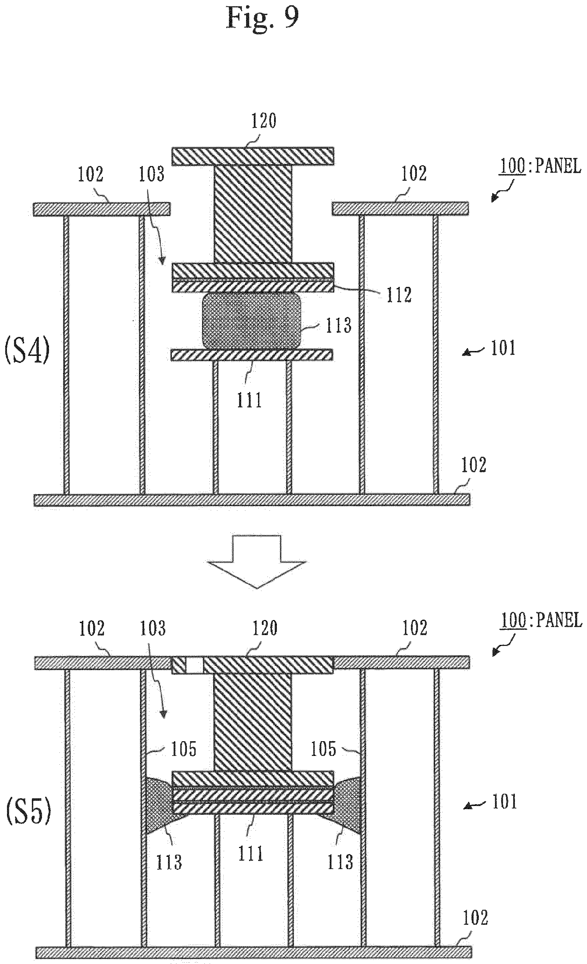

Concerning an embodiment in which a pushing plate adhered to the bottom surface of an insert is pressed against a sealer, its difference from Embodiment 1 will mainly be described with reference to FIG. 9.

### Description of Configuration

The configuration of a panel 100 is the same as that of Embodiment 1.

### Description of Procedure

In a sealing process, the first step (S1) to the third step (S3) are the same as those of Embodiment 1.

FIG. 9 illustrates the fourth step (S4) and the fifth step (S5).

In the fourth step (S4), a pushing plate 112 is adhered to the bottom surface of an insert 120, and the insert 120 is placed on a sealer 113 applied to the upper surface of a bottom plate 111.

In the fifth step (S5), the insert 120 is pushed into an embedding hole 103. That is, the insert 120 is embedded in the embedding hole 103.

Hence, the pushing plate 112 is pressed against the sealer 113 applied to the upper surface of the bottom plate 111. Then, the sealer 113 protrudes into the gap between the side portion of the bottom plate 111 and a wall surface 105 of a honeycomb core 101. As a result, the gap is closed with the sealer 113.

The procedure of the fixing process is the same as that in Embodiment 1.

### Effect of Embodiment 3

As the pushing plate 112 is pressed against the sealer 113 with using the insert 120, the sealing process can be carried out without using a rod member 114. That is, the sealing process is further facilitated.

### Example

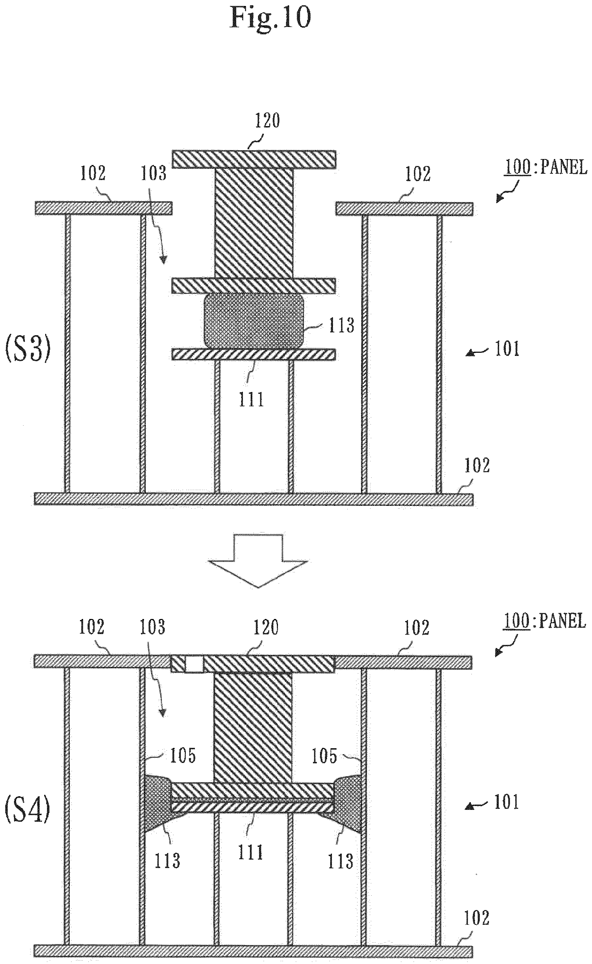

Concerning an example in which a bottom portion of an insert is pressed as a pushing plate against a sealer, its difference from Embodiment 1 will mainly be described with reference to FIG. 10.

### Description of Configuration

The configuration of a panel 100 before a sealing process is the same as that of Embodiment 1.

### Description of Procedure

In the sealing process, the first step (S1) and the second step (S2) are the same as those of Embodiment 1.

FIG. 10 illustrates the third step (S3) and the fourth step (S4).

In the third step (S3), an insert 120 is placed on a sealer 113 applied to the upper surface of a bottom plate 111. The bottom surface of the insert 120 has a shape and size that match the inlet of an embedding hole 103.

In the fourth step (S4), the insert 120 is pushed into the embedding hole 103. That is, the insert 120 is embedded in the embedding hole 103.

Hence, the bottom portion of the insert 120 is pressed as a pushing plate against the sealer 113 applied to the upper surface of the bottom plate 111. Then, the sealer 113 protrudes into the gap between the side portion of the bottom plate 111 and a wall surface 105 of a honeycomb core 101. As a result, the gap is closed with the sealer 113.

The procedure of the fixing process is the same as that in Embodiment 1.

### Effect of Example

As the bottom surface of the insert 120 has the shape and size that match the inlet of the syringe 130, it is possible to cause the sealer 113 to protrude sufficiently into the gap without specially preparing a pushing plate 112. Accordingly, the sealing process can be carried out without specially preparing the pushing plate 112. Furthermore, the number of steps of the sealing process can be decreased.

### Supplement to Embodiments

The procedure of the panel processing method may be performed either by humans or by machines. Namely, an operator may perform each step of the panel processing method, or a panel processing device may carry out each step of the panel processing method.

The procedure of the panel processing method may be performed by a combination of humans and machines. Namely, the operator may perform some steps, and the panel processing device may perform the remaining steps.

The panel processing device is a device fabricated to process the panel 100 according to the panel processing method.

Each embodiment is an exemplification of a preferred mode and is not intended to restrict the technical scope of the present invention. Each embodiment may be practiced partially or in combination with another embodiment. The procedure of the panel processing method may be changed appropriately.

### List of Reference Signs

- 100: panel
- 101: honeycomb core
- 102: face material
- 103: embedding hole
- 104: wall
- 105: wall surface
- 111: bottom plate
- 112: pushing plate
- 113: sealer
- 114: rod member
- 115: adhesive
- 120: insert
- 121: injection hole
- 122: filler
- 130: syringe

## Claims

1. A panel processing method of processing a panel (100) that uses a honeycomb core (101), comprising:
- placing a bottom plate (111) on a bottom portion of an embedding hole (103) which is a hole formed in the honeycomb core (101) and in which an insert (120) is to be embedded,
- applying a sealer (113) for closing a gap between a side portion of the bottom plate (111) and a wall surface (105) of the honeycomb core to an upper surface of the bottom plate (111), and
- pressing a pushing plate (112) against the sealer (113) so that the sealer (113) protrudes into the gap,
- applying a temporary fixing adhesive to an upper surface of the pushing plate (112),
- inserting an insert (120) in the embedded hole (130),
- injecting a filler (122) from an upper portion of the insert (120), wherein the filler (122) is an adhesive utilised for fixing the insert (120) to the embedding hole (103).

2. The panel processing method according to claim 1,
wherein each of a flat surface of the bottom plate (111) and a flat surface of the pushing plate (112) has a shape and a size that match an inlet of the embedding hole (103).

3. The panel processing method according to claim 1 or 2,
wherein the sealer (113) is applied to the upper surface of the bottom plate (111), thereafter the pushing plate (112) is placed on the sealer (113), and the pushing plate (112) is pushed with using a rod member (114), so that the pushing plate (112) is pressed against the sealer (113).

4. The panel processing method according to claim 1 or 2,
wherein the sealer (113) is applied to the upper surface of the bottom plate (111), thereafter the pushing plate (112) is placed on the sealer (113), and the insert (120) is embedded in the embedding hole (103), so that the pushing plate (112) is pressed against the sealer (113).

5. A panel processing method of processing a panel (100) that uses a honeycomb core (101), comprising:
- placing a bottom plate (111) on a bottom portion of an embedding hole (103) which is a hole formed in the honeycomb core (101) and in which an insert (120) is to be embedded,
- adhering a pushing plate (112) to a bottom surface of an insert (120) against the sealer (113)
- applying a sealer (113) for closing a gap between a side portion of the bottom plate (111) and a wall surface (105) of the honeycomb core to an upper surface of the bottom plate (111),
- inserting the insert (120) in the embedded hole (130), so that the pushing plate (112) is pressed against the sealer (113), and so that the sealer (113) protrudes into the gap,
- injecting a filler (122) from an upper portion of the insert (120), wherein the filler (122) is an adhesive utilised for fixing the insert (120) to the embedding hole (103).

## Patentansprüche

1. Paneelbearbeitungsverfahren zum Bearbeiten eines Paneels (100), das einen Wabenkern (101) verwendet, wobei das Verfahren Folgendes umfasst:
- Platzieren einer Bodenplatte (111) auf einem Bodenbereich eines Einbettungslochs (103), das ein in dem Wabenkern (101) ausgebildetes Loch ist und in das ein Einsatz (120) eingebettet werden soll,
- Aufbringen eines Dichtungsmittels (113) auf eine Oberfläche der Bodenplatte (111), um einen Zwischenraum zwischen einem Seitenbereich der Bodenplatte (111) und einer Wandfläche (105) des Wabenkerns zu schließen, und
- Pressen einer Druckplatte (112) gegen das Dichtungsmittel (113), so dass das Dichtungsmittel (113) in den Zwischenraum hineinragt,
- Aufbringen eines temporären Befestigungsklebstoffs auf eine Oberfläche der Druckplatte (112),
- Einsetzen eines Einsatzes (120) in das eingebettete Loch (130),
- Einspritzen eines Füllmittels (122) von einem oberen Bereich des Einsatzes (120) aus, wobei das Füllmittel (122) ein Klebstoff ist, der zum Befestigen des Einsatzes (120) an dem Einbettungsloch (103) verwendet wird.

2. Paneelbearbeitungsverfahren nach Anspruch 1,
wobei sowohl eine ebene Oberfläche der Bodenplatte (111) als auch eine ebene Oberfläche der Druckplatte (112) eine Form und eine Größe haben, die zu dem Einlass des Einbettungslochs (103) passen.

3. Paneelbearbeitungsverfahren nach Anspruch 1 oder 2,
wobei das Dichtungsmittel (113) auf die Oberseite der Bodenplatte (111) aufgebracht wird, danach die Druckplatte (112) auf dem Dichtungsmittel (113) platziert wird und die Druckplatte (112) unter Verwendung eines Stangenelements (114) gedrückt wird, so dass die Druckplatte (112) gegen das Dichtungsmittel (113) gepresst wird.

4. Paneelbearbeitungsverfahren nach Anspruch 1 oder 2,
wobei das Dichtungsmittel (113) auf die Oberseite der Bodenplatte (111) aufgebracht wird, danach die Druckplatte (112) auf dem Dichtungsmittel (113) platziert wird und der Einsatz (120) in das Einbettungsloch (103) eingebettet wird, so dass die Druckplatte (112) gegen das Dichtungsmittel (113) gepresst wird.

5. Paneelbearbeitungsverfahren zum Verarbeiten eines Paneels (100), das einen Wabenkern (101) verwendet, wobei das Verfahren Folgendes umfasst:
- Platzieren einer Bodenplatte (111) auf einem Bodenbereich eines Einbettungslochs (103), das ein in dem Wabenkern (101) ausgebildetes Loch ist und in das ein Einsatz (120) eingebettet werden soll,
- Anhaften einer Druckplatte (112) an der Unterseite eines Einsatzes (120) gegen das Dichtungsmittel (113),
- Aufbringen eines Dichtungsmittels (113) auf die Oberseite der Bodenplatte (111), um einen Zwischenraum zwischen einem Seitenbereich der Bodenplatte (111) und einer Wandfläche (105) des Wabenkerns zu schließen,
- Einsetzen des Einsatzes (120) in das eingebettete Loch (130), so dass die Druckplatte (112) gegen das Dichtungsmittel (113) gepresst wird und so, dass das Dichtungsmittel (113) in den Zwischenraum hineinragt,
- Einspritzen eines Füllmittels (122) von einem oberen Bereich des Einsatzes (120) aus, wobei das Füllmittel (122) ein Klebstoff ist, der zum Befestigen des Einsatzes (120) an dem Einbettungsloch (103) verwendet wird.

## Revendications

1. Procédé de traitement de panneau pour traiter un panneau (100) qui utilise une âme en nid d'abeille (101), comprenant les étapes consistant à :
- placer une plaque inférieure (111) sur une partie inférieure d'un trou d'encastrement (103) qui est un trou formé dans l'âme en nid d'abeille (101) et dans lequel un insert (120) doit être encastré,
- appliquer un produit de scellement (113) pour fermer un espace entre une partie latérale de la plaque inférieure (111) et une surface de paroi (105) de l'âme en nid d'abeille sur une surface supérieure de la plaque inférieure (111),
- presser une plaque de poussée (112) contre le produit de scellement (113) de sorte que le produit de scellement (113) fasse saillie dans l'espace,
- appliquer un adhésif de fixation temporaire sur une surface supérieure de la plaque de poussée (112),
- insérer un insert (120) dans le trou d'encastrement (130),
- injecter un produit de remplissage (122) à partir d'une partie supérieure de l'insert (120), le produit de remplissage (122) étant un adhésif utilisé pour fixer l'insert (120) au trou d'encastrement (103).

2. Procédé de traitement de panneau selon la revendication 1,
dans lequel chacune d'une surface plate de la plaque inférieure (111) et d'une surface plate de la plaque de poussée (112) a une forme et une taille qui correspondent à une entrée du trou d'encastrement (103).

3. Procédé de traitement de panneau selon la revendication 1 ou 2,
dans lequel le produit de scellement (113) est appliqué sur la surface supérieure de la plaque inférieure (111), après quoi la plaque de poussée (112) est placée sur le produit de scellement (113), puis la plaque de poussée (112) est poussée en utilisant un élément formant tige (114) de sorte que la plaque de poussée (112) soit pressée contre le produit de scellement (113).

4. Procédé de traitement de panneau selon la revendication 1 ou 2,
dans lequel le produit de scellement (113) est appliqué sur la surface supérieure de la plaque inférieure (111), après quoi la plaque de poussée (112) est placée sur le produit de scellement (113), et l'insert (120) est encastré dans le trou d'encastrement (103) de sorte que la plaque de poussée (112) soit pressée contre le produit de scellement (113).

5. Procédé de traitement de panneau pour traiter un panneau (100) qui utilise une âme en nid d'abeille (101), comprenant les étapes consistant à :
- placer une plaque inférieure (111) sur une partie inférieure d'un trou d'encastrement (103) qui est un trou formé dans l'âme en nid d'abeille (101) et dans lequel un insert (120) doit être encastré,
- faire adhérer une plaque de poussée (112) à une surface inférieure d'un insert (120) contre le produit de scellement (113),
- appliquer un produit de scellement (113) pour fermer un espace entre une partie latérale de la plaque inférieure (111) et une surface de paroi (105) de l'âme en nid d'abeille sur une surface supérieure de la plaque inférieure (111),
- insérer l'insert (120) dans le trou d'encastrement (130) de sorte que la plaque de poussée (112) soit pressée contre le produit de scellement (113) et que le produit de scellement (113) fasse saillie dans l'espace,
- injecter un produit de remplissage (122) à partir d'une partie supérieure de l'insert (120), le produit de remplissage (122) étant un adhésif utilisé pour fixer l'insert (120) au trou d'encastrement (103).
